# FASCICULE DE BREVET EUROPEEN

(11) **EP 0 290 318 B1**
(45) Date de publication et mention de la délivrance du brevet: **27.01.1993**
(21) Numéro de dépôt: 88401027.3
(22) Date de dépôt: 27.04.1988
(51) Int. Cl.: C01G 15/00, C22B 58/00, C22B 3/00

(54) **Procédé de récupération de gallium par extraction liquide-liquide**
Verfahren zur Flüssig-Flüssig-Extraktion von Gallium
Method of recovering gallium by liquid-liquid extraction

(30) Priorité: 06.05.1987 FR 8706370
(43) Date de publication de la demande: 09.11.1988
(73) Titulaire: RHONE-POULENC CHIMIE, 92408 Courbevoie Cédex (FR)
(72) Inventeur: Sabot, Jean-Louis, F-78600 Maisons Laffitte (FR); Fitoussi, Richard, F-94160 Saint-Mande (FR)
(74) Mandataire: Esson, Jean-Pierre

(56) Documents cités:
- EP-A- 0 145 659
- EP-A- 0 199 905
- FR-A- 2 277 897
- FR-A- 2 307 047
- FR-A- 2 307 882
- FR-A- 2 365 641
- FR-A- 2 495 599
- FR-A- 2 495 600
- FR-A- 2 495 601
- FR-A- 2 532 295
- FR-A- 2 532 296

## Description

La présente invention concerne un procédé de récupération de gallium par extraction liquide-liquide, à partir de solutions aqueuses très basiques contenant du gallium, comme par exemple, les lessives d'aluminate de sodium du procédé BAYER de fabrication d'alumine.

On connaît, notamment d'après les demandes de brevet français n^{o} 2 277 897, 2 307 047, 2 307 882, 2 495 601, 2 532 295, 2 532 296, un procédé de récupération du gallium présent dans des solutions aqueuses alcalines par extraction liquide/liquide au moyen d'une phase organique contenant un extractant et un solvant organique, et un procédé de purification de la solution de gallium permettant notamment d'éliminer certains autres cations, tel que par exemple les cations aluminium et sodium coextraits avec le gallium à partir des lessives d'aluminates citées précédemment.

Ce procédé consiste à faire passer le gallium contenu dans la solution fortement basique, dans la phase organique d'extraction par un procédé d'extraction liquide-liquide. Dans une deuxième étape, cette phase organique est traitée par une première solution acide pour en extraire sélectivement au moins une partie des cations aluminium et sodium coextraits avec le gallium. Cette étape permet d'appauvrir la phase organique en cations autre que le gallium et donc diminuer a teneur en impuretés de la solution acide de gallium obtenue dans la troisième étape. Cette troisième étape est une extraction ou récupération du gallium contenu dans la phase organique par un traitement avec une seconde solution acide.

La solution acide de gallium ainsi obtenue contient également d'autres ions métalliques et notamment, par exemple, des ions aluminium et sodium qui n'ont pas été extraits lors du traitement de la phase organique avec la première solution acide.

Pour éliminer ces ions métalliques, il a été proposé de nombreux procédés et notamment, à titre d'exemple, les procédés décrits dans les brevets français n^{o} 2 495 599, 2 495 600 et 2 495 601 de la demanderesse.

Ces procédés consistent soit à traiter la solution de gallium par passage sur une résine échangeuse d'ions du type fortement basique, soit d'extraire le gallium par une extraction liquide-liquide, les agents extractants pouvant être des sels d'ammonium quaternaires, des alcools, par exemple.

La solution de gallium obtenue peut ensuite subir de nouvelles étapes de purification.

La solution finale de gallium est ensuite traitée par différents procédés pour produire du gallium métal de très grande pureté, ou des alliages de gallium avec d'autres composés.

Le procédé décrit ci-dessus permet d'obtenir avec de très bons rendements d'extraction et de récupération une solution de gallium de très grande pureté. Toutefois, la deuxième étape du procédé, à savoir le traitement de la phase organique par une solution acide requiert la consommation d'une quantité importante de solution acide qui est rejetée comme effluent après utilisation, ainsi que la solution acide récupérée après extraction sélective du gallium. Ces effluents liquides importants sont un inconvénient requérant un traitement avant leur rejet et augmentant le coût du procédé.

La présente invention a, notamment, pour but de remédier à ces inconvénients, en proposant un procédé permettant d'une part de diminuer la consommation d'acide et d'autre part de diminuer de manière notable la quantité d'effluents rejetés. Ainsi, l'invention permet d'améliorer sensiblement la valeur économique du procédé.

A cet effet, l'invention propose un procédé de récupération de gallium contenu dans des solutions aqueuses très basiques, par extraction liquide/liquide au moyen d'une phase organique constituée principalement d'un extractant organique et d'un solvant organique, comprenant les étapes suivantes :
(i) extraire le gallium de la solution très basique par la phase organique précitée,
(ii) laver ladite phase organique contenant le gallium avec une première solution acide, pour en extraire au moins partiellement et sélectivement par rapport au gallium, les cations présents dans la solution organique,
(iii) extraire le gallium de ladite phase organique lavée avec une deuxième solution acide,
(iv) ajuster la concentration en ions halogénures de la solution acide de gallium obtenue à l'étape (iii)
(v) extraire sélectivement le gallium de cette solution acide,
(vi) récupérer le gallium ainsi extrait,
caractérisé en ce que la première solution acide utilisée dans l'étape (ii) est constituée par au moins une partie de la solution acide récupérée dans l'étape (v) après extraction sélective du gallium.

Les différentes étapes (i) à (vi) ont déjà été décrites dans de nombreux brevets et notamment dans les demandes de brevet français n^{o} 2 277 897, 2 307 047, 2 307 882, 2 495 601, 2 532 295, 2 532 296, dont les textes font partie intégrante de la présente demande.

Ainsi, le lavage de la solution organique contenant le gallium (étape ii) est réalisé selon un procédé d'extraction liquide-liquide à contre-courant par une première solution acide ayant une concentration en ions H⁺ et un débit d'alimentation tels que la concentration en ions H⁺ de la solution acide en contact avec la solution organique qui entre dans l'étape (ii) d'extraction à contre-courant, soit inférieure à 1 environ, de préférence comprise entre 0,1 et 1 et avantageusement entre 0,2 et 0,7 environ.

Comme acides convenables à l'invention, on peut citer à titre d'exemples, les acides minéraux tels que l'acide sulfurique, l'acide phosphorique, l'acide nitrique, l'acide chlorhydrique.

Toutefois, lorsque l'on opère en présence d'ions chlorure, la concentration en ions H⁺ peut être choisie supérieure à 1N à condition que la concentration en ions chlorure soit au moins égale à 4 M.

Ainsi, la concentration en ions chlorure peut être comprise entre 4 et 12 M avantageusement entre 4 et 6 M, la concentration en ions H⁺ étant comprise avantageusement entre 4 et 6 N.

Dans l'étape (iii) d'extraction du gallium de la phase organique par une seconde solution acide, l'extraction est également réalisée selon un procédé d'extraction liquide-liquide à contre-courant. Comme pour l'étape (ii) ci-dessus, le débit et la concentration en ions H⁺ de la seconde solution acide sont déterminés pour avoir une concentration en ions H⁺ déterminée dans la solution acide en contact avec la solution organique entrant dans l'étape (iii).

Ainsi cette concentration en ions H⁺ doit être supérieure à 1,5 N de préférence comprise entre 1,5 et 6 N environ et avantageusement entre 3,5 et 4,5 N environ.

Toutefois, si la solution acide contient des ions chlorures, il faut que la concentration en ions chlorures soit inférieure à 2,5 M environ.

L'étape V d'extraction sélective du gallium à partir de la solution acide peut être effectuée selon de nombreux procédés déjà décrits dans des brevets et publications.

On peut citer à titre d'exemple, les procédés d'extraction liquide-liquide utilisant comme agent extractant un ou plusieurs agents solvatants tels que, par exemple, des éthers, des cétones, alcools, esters ou composés organophosphorés, ou des agents anioniques d'extraction tels que, par exemple, les amines ou sels d'ammonium quaternaire.

Il est également possible d'extraire sélectivement le gallium par passage de la solution acide de gallium sur une résine échangeuse d'ions. Les résines convenables pour l'invention sont celles du type basique, capables de retenir le gallium, certainement sous une forme de complexe anionique GaX⁴⁻, X représentant un halogène, de préférence le chlore ou le brome et avantageusement le chlore.

A titre d'exemple, on peut citer les résines décrites dans le brevet français n^{o} 2 495 601 et qui comportent des motifs de formules : 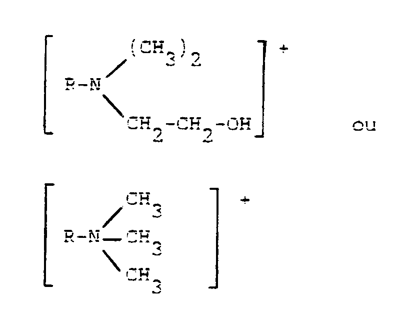
dans lesquelles R représente, par exemple, un copolymère styrène-divinylbenzène ou acrylique-divinylbenzène. On utilise, par exemple, les produits commercialisés sous les marques : Dowex 1®, Dowex 2®, Dowex 3®, Duolite A 101 D®, Duolite A 42®, Lewatit M 500®, Amberlite IRA 400®, Amberlite IRA 410®, Amberlite IRA 900®, Amberlite IRA 910®, Duolite A 14®, Amberlite IR 45®.

La phase organique utilisée dans l'étape (i) comprend un extractant qui est de préférence une hydroxyquinoléine substituée, par exemple la 7-(5,5,7,7-tétraméthyl-1-octène-3-yl)-8-hydroxyquinoléine, les hydroxyquinoléines commercialisées sous les dénominations Kelex 100®, par la Société Schering ou LIX 26® par la Société HENKEL. On peut également utiliser comme phase organique, celles notamment décrites dans les brevets français n^{o} 2 277 897, 2 307 047, 2 307 882, 2 532 295, 2 532 296, les demandes de brevet japonais n^{o} 60 042 234, 59 186 683, 59 500 24, la demande de brevet européen n^{o} 199905. De façon plus générale, l'invention s'applique avec toute phase organique permettant d'extraire le gallium selon un procédé comprenant les étapes (i) à (vi) précitées.

Brièvement, la phase organique comprend l'extractant, un solvant par exemple du kérosène, un ou plusieurs composés à fonctions alcools tels que des alcools lourds ou phénols lourds ainsi que divers autres composés solvatants tels que certains esters phosphoriques. Il est également avantageux d'ajouter des composés accélérant la vitesse d'extraction du gallium tels que des composés contenant au moins une fonction acide carboxylique, des composés organophosphorés ou des sulfates ou sulfonates substitués.

La concentration en agent extractant n'est pas critique, et est généralement de l'ordre de 10 %.

On peut également utiliser comme phase organique, un polymère chargé avec une hydroxyquinoléine substituée tel que décrit dans la demande japonaise n^{o} 6042234, les étapes (ii) et (iii) du procédé devenant des opérations d'élution du polymère chargé.

La demande japonaise n^{o} 59186683 décrit l'utilisation d'un mélange d'hydroxyquinoléines substituées à savoir un mélange de 7-alkyl-8-hydroxyquinoléine et de 7-(5,5,7,7, tétraméthyl-1-octène-3-yl)-8-hydroxyquinoléine.

L'invention permet donc de réduire et même supprimer l'introduction d'acide au niveau de l'étape (ii). En effet au moins la majeure partie de la solution de lavage de la phase organique est constituée par la solution acide récupérée à l'étape (V).

Cette réduction de la consommation totale d'acide permet d'améliorer la rentabilité du procédé et de diminuer fortement la quantité d'effluents liquides rejetés.

Le recyclage de la solution acide dans l'étape (ii) n'affecte pas le rendement de l'extraction notamment en cations aluminium et sodium, dans cette étape.

Selon une autre caractéristique de l'invention, l'ajustement de la concentration en ions halogénures de l'étape (iv) est réalisé par addition d'un halogénure métallique soit sous forme solide, soit en solution avantageusement concentrée, ou d'acide chlorhydrique sous forme gazeuse ou en solution concentrée.

Avantageusement, et notamment quand l'ajustement de la concentration en chlorure est réalisée par addition d'un halogénure métallique, la solution acide récupérée après l'extraction sélective du gallium (étape V) est recyclée en totalité à l'étape (ii) de lavage de la phase organique.

Dans cette variante, le rejet d'effluents liquides est limité au minimum et n'intervient qu'au niveau de l'étape (ii).

Dans l'étape (iv), la concentration en ions halogénures est ajustée à une valeur comprise entre 3,5 M et 8 M environ.

Cet ajustement est réalisé, de manière connue, soit par l'addition d'acide halogéné sous forme gazeuse ou en solution concentrée, soit par l'addition d'halogénures métalliques, avantageusement d'halogénures de métaux alcalins ou de métaux alcalino-terreux.

Comme ions halogénures préférés de l'invention, ou peut citer les ions chlorures et bromures, l'ion chlorure étant avantageusement préféré.

De préférence, on choisit comme halogénure métallique, le chlorure de sodium, notamment quand la solution fortement basique contenant le gallium est une solution d'aluminate de sodium provenant du procédé BAYER de préparation de l'aluminium.

Selon une autre caractéristique de l'invention, la concentration en ions H⁺ et Cl⁻ et le débit de recyclage de la solution acide récupérée à l'étape (V) sont controlés et ajustés si nécessaire pour respecter les valeurs de concentration en ions H⁺ et Cl⁻ dans l'étape (ii) décrite précédemment.

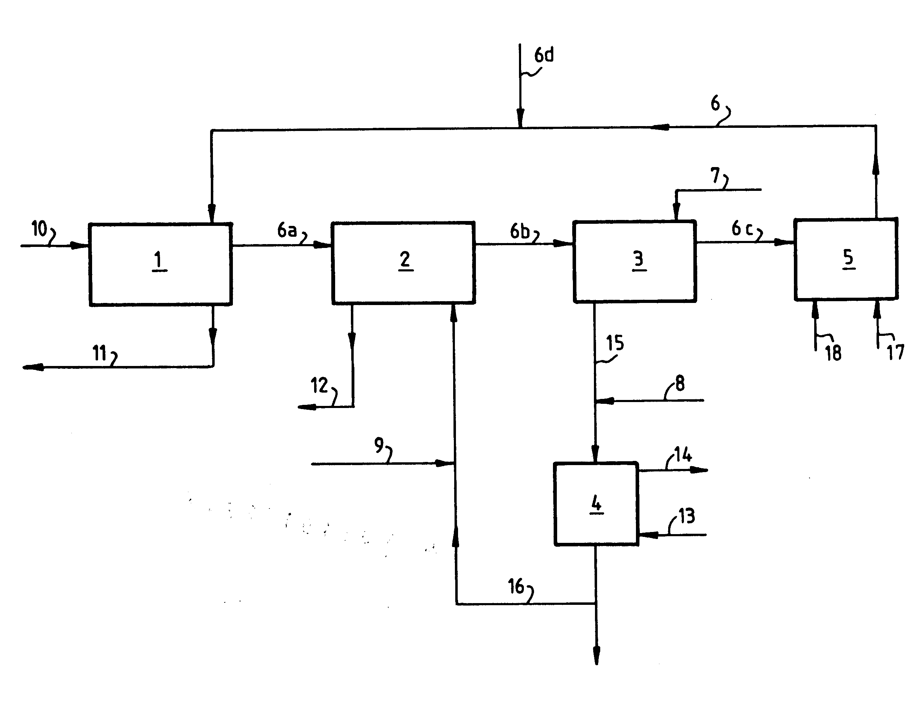

D'autres avantages, buts et caractéristiques de l'invention apparaitront plus clairement au vu de la figure annexée et des exemples donnés ci-dessous uniquement à titre indicatif et d'illustration de l'invention.

La figure unique représente un schéma synoptique du procédé de l'invention.

### Exemple 1

Dans une batterie d'extraction liquide-liquide à contre-courant (1), on alimente par la conduite (6), 1.000 l d'une phase organique de composition pondérale suivante :

| | |
|---|---|
| Kelex 100 | 8 % |
| n-décanol | 10 % |
| Acide versatic | 5 % |
| Kérosène | 77 % |

On alimente également 1.000 l de solution décomposée d'aluminate de sodium issue d'un procédé Bayer de fabrication d'aluminium. Cette solution contient notamment :

| | |
|---|---|
| Al₂O₃ | 82 g/l |
| Na₂O | 166 g/l |
| Ga | 240 mg/l |

La solution décomposé, après mélange avec la phase organique et séparation de celle-ci est soutirée par la conduite (11) pour, par exemple, être recyclée dans le procédé BAYER. Cette solution a, après traitement, la composition suivante :

| | |
|---|---|
| Al₂O₃ | 80 g/l |
| Na₂O | 156 g/l |
| Ga | 80 mg/l |

Les concentrations en gallium, alumine et oxyde de sodium dans la phase organique sont les suivantes :

| | |
|---|---|
| Al₂O₃ | 2 g/l |
| Na₂O | 10 g/l |
| Ga | 160 mg/l |

Cette phase organique est ensuite alimentée dans un extracteur liquide-liquide à contre-courant (2) par la conduite (6a).

On opère le lavage de la phase organique par une solution acide alimentée par la conduite (16) et provenant de l'étape (v) mise en oeuvre dans l'extracteur (4).

Dans cet extracteur (2), on met en contact 1 000 l de phase organique précipitée avec 60 l de la solution acide provenant de l'extracteur (4) et 40 l d'eau.

Cette solution acide a une concentration en H₂SO₄ égale à 2 moles/litre et en HCl à 4 moles/litre.

Après agitation et séparation des phases, la phase organique récupérée par la conduite (6b) contient :

| | |
|---|---|
| Ga | 160 mg/l |
| Al₂O₃ | 0,05 g/l |
| Na₂O | 0,1 g/l |

La solution acide évacuée par la conduite (12) contient :

| | |
|---|---|
| Ga | < 10 mg/l |
| Al₂O₃ | 13,9 g/l |
| Na₂O | 70,7 g/l |
| [H⁺] | 0,46 N |
| [Cl⁻] | 2,9 M |

La phase organique recueillie en sortie de l'extracteur (2) est alimentée par la conduite (6b) dans un extracteur (3) où elle est mélangée à 100 l d'une solution acide alimentée par la conduite 7 et ayant une concentration en H₂SO₄ de 4 moles/l.

Après agitation et séparation des phases, la phase organique est évacuée par la conduite (6c) vers une batterie (5) d'extracteur liquide-liquide où elle subira plusieurs lavages avec de l'eau avant d'être recyclée dans l'extracteur 1 par la conduite (6), après addition éventuelle de solvant organique frais par la conduite (6d).

La solution acide récupérée contient :

| | |
|---|---|
| Ga | 1,6 g/l |
| Al₂O₃ | 0,5 g/l |
| Na₂O | 1 g/l |
| [H⁺] | 4N |

Cette solution contient également de nombreux autres cations métalliques dont les concentrations sont de l'ordre de 10 à 200 mg/l.

Avant d'extraire le gallium de cette solution dans l'extracteur (4), on ajuste la concentration en ions chlorure de celle-ci par addition d'acide chlorhydrique par la conduite (8) à une valeur de 4 M.

Cette solution est alimentée par la conduite (15) selon un débit de 1 l/h dans des colonnes contenant 0,6 l de résine Duolite A 101® du type ammonium quaternaire.

La solution acid récupérée par la conduite (16) contient :

| | |
|---|---|
| Ga | < 10 mg/l |
| H₂SO₄ | 2 moles/l |
| HCl | 4 moles/l |
| Al₂O₃ | 0,5 g/l |
| Na₂O | 0,1 g/l |

60 % de cette solution acide sont recyclés par la conduite (16) dans l'extracteur (2), constituant ainsi la solution de lavage de la phase organique.

Ainsi, la majeure partie de l'acide alimenté dans le procédé de l'invention est d'abord utilisé pour extraire le gallium de la phase organique (extracteur 3) puis pour laver la phase organique par extraction notamment de l'aluminium et du sodium dans l'extracteur (2) avant d'être évacué comme effluent par la conduite 12. Cette double utilisation de la solution acide représente une économie importante pour le procédé, tant sur la consommation des réactifs acides que sur le traitement des effluents.

Le gallium retenu sur la résine de l'extracteur (4) est récupéré par élution de la résine avec de l'eau (1 l/h) alimenté par la conduite (13) et récupéré par la conduite (14).

La solution obtenue contient :

| | |
|---|---|
| Ga | 52 g/l |
| Al₂O₃ | 5 mg/l |
| Na₂O | 20 mg/l |
| Fe | 100 mg/l |

autres cations métalliques de l'ordre de quelque mg/l.

Cette solution concentrée de gallium peut être soumise ensuite à des purifications successives selon des méthodes connues, telles que, par exemple, extraction liquide-liquide, traitement sur résines.

Ces opérations de purification sont d'un coût très réduit car le volume de solution à traiter est faible en raison de la concentration élevée en gallium.

### Exemple 2

Cet exemple est identique à l'exemple 1 à l'exception que la solution acide alimentée par la conduite (7) dans l'extracteur (3) contient 5 moles/l d'acide sulfurique.

La solution recueillie en sortie de l'extracteur (3) contient :

| | |
|---|---|
| Ga | 1,6 g/l |
| Al₂O₃ | 0,8 g/l |
| Na₂O | 1,5 g/l |
| H₂SO₄ | 2,5 moles/l |

On ajuste la teneur en chlorure de cette solution à une valeur de 4 M en Cl⁻ par addition d'une solution de chloure de sodium.

La nouvelle solution contient :

| | |
|---|---|
| Ga | 1,33 g/l |
| Al₂O₃ | 0,67 g/l |
| Na₂O | 1,2 g/l |
| H₂SO₄ | 2,1 moles/l |
| NaCl | 4 M |

Cette solution est alimentée dans les colonnes de résine échangeuse d'ions de manière identique à l'exemple 1.

La solution acide recueillie en sortie des colonnes contient :

| | |
|---|---|
| Ga | < 10 mg/l |
| H₂SO₄ | 2,1 moles/l |
| NaCl | 4 M |
| Al₂O₃ | 0,8 g/l |
| Na₂O | 0,15 g/l |

Cette solution est recyclée en totalité à l'étape (ii) dans l'extracteur (2) pour laver la phase organique et en extraire au moins partiellement l'aluminium et le sodium.

La solution acide recueillie par la conduite (12) contient :

| | |
|---|---|
| Ga | < 10 mg/l |
| Al₂O₃ | 16 g/l |
| Na₂O | 83 g/l |
| [H⁺] | 0,3 N |
| [Cl⁻] | 3,8 M |

La solution de gallium recueillie après elution de la résine contient :

| | |
|---|---|
| Ga | 50 g/l |
| Al₂O₃ | 5 mg/l |
| Na₂O | 15 mg/l |
| Fe | 150 mg/l |

autres cations métalliques, de l'ordre de quelque mg/l.

### Exemple 3

Cet exemple diffère des exemples 1 et 2 en ce que la solution acide alimentée dans l'extracteur (3) a une concentration de 1,8 N en acide chlorhydrique.

La phase aqueuse recueillie en sortie de l'extracteur 3 contient :

| | |
|---|---|
| Ga | 0,64 g/l |
| Al₂O₃ | 0,2 g/l |
| Na₂O | 0,4 g/l |
| HCl | 1,8 N |
| Fe | 0,1 g/l |

Le gallium est extrait de cette solution par un procédé d'extraction liquide-liquide utilisant comme agent extractant un sel d'ammonium quaternaire commercialisé par la société HENKEL sous la dénomination Aliquat 336®, en solution dans un solvant commercialisé sous la dénomination Solvesso 150®, avec une concentration de 0,1 M.

Cette extraction est mise en oeuvre dans une batterie d'extracteurs liquide liquide montés en série.

La solution acide de gallium est alimentée dans un extracteur intermédiaire simultanément avec une solution d'acide chlorhydrique 12 N. Le solvant extractant est lavé en sortie de batterie par une solution d'acide chlorhydrique 6 N.

Le gallium est réextrait du solvant extractant par lavage à l'eau.

La solution aqueuse sortant de la batterie d'extracteurs a une concentration en acide chlorhydrique de 6 N.

60 % de cette solution sont recyclés dans l'étape (ii) par la conduite (16) pour laver la phase organique.

La solution acide recueillie par la conduite (12) contient :

| | |
|---|---|
| Ga | < 10 mg/l |
| Al₂O₃ | 8 g/l |
| Na₂O | 40 g/l |
| [H⁺] | 5,1 N |
| [Cl⁻] | 5,9 M |

Ainsi, comme dans les exemples 1 et 2, la solution acide utilisée pour extraire le gallium de la phase organique (étape iii) est également utilisée pour laver cette phase organique pour en extraire l'aluminium et le sodium.

## Revendications

1. Procédé de récupération de gallium contenu dans des solutions aqueuses très basiques par extraction liquide/liquide au moyen d'une phase organique constituée principalement d'un extractant organique et d'un solvant organique, comprenant les étapes suivantes :
(i) extraire le gallium de la solution très basique par la phase organique précitée,
(ii) laver ladite phase organique contenant le gallium avec une première solution acide, pour en extraire au moins partiellement et sélectivement par rapport au gallium, les cations présents dans la solution organique,
(iii) extraire le gallium de ladite phase organique lavée avec une deuxième solution acide,
(iv) ajuster la concentration en ions halogénures de la solution acide de gallium obtenue à l'étape (iii),
(v) extraire sélectivement le gallium de cette solution acide,
(vi) récupérer le gallium ainsi extrait,
caractérisé en ce que la première solution acide utilisée dans l'étape (ii) est constituée par au moins une partie de la solution acide récupérée dans l'étape (v) après extraction sélective du gallium.

2. Procédé selon la revendication 1, caractérisé en ce que, la première solution acide précitée est constituée par la totalité de la solution acide précitée récupérée dans l'étape (v).

3. Procédé selon la revendication 1 ou 2, caractérisé en ce qu'on ajuste la concentration en ions halogénures dans l'étape (iv) à une valeur comprise entre 3,5 M et 8 M.

4. Procédé selon la revendication 1, 2 ou 3, caractérisé en ce que l'ajustement de la concentration en ions halogénures de l'étape (iv) est réalisé par addition d'acide chlorhydrique gazeux ou en solution, ou d'halogénures métalliques sous forme pure ou en solution.

5. Procédé selon la revendication 4, caractérisé en ce que les halogénures métalliques sont des chlorures de métaux alcalins ou alcalino-terreux, de préférence le chlorure de sodium.

6. Procédé selon l'une des revendications précédentes, caractérisé en ce que la solution acide de gallium sortant de l'étape (iii) a une concentration en ions H⁺ supérieure à 1,5 N et de préférence comprise entre 1,5 et 6 N, la concentration en ions chlorures étant au plus égale à 2,5 N et en ce que la solution acide sortant de l'étape (ii) précitée a une concentration en ions H⁺ inférieure à 1 N.

7. Procédé selon l'une des revendications 1 à 5, caractérisé en ce que la solution acide de gallium sortant de l'étape (iii) a une concentration en ions H⁺ supérieure à 1,5 N et de préférence comprise entre 1,5 et 6 N, la concentration en ions chlorures étant au plus égale à 2,5 N et en ce que la solution acide sortant de l'étape (ii) a une concentration en ions H⁺ supérieure à 1 N et une concentration en ions halogénures au moins égale à 4 M et de préférence comprise entre 4 et 6 M.

8. Procédé selon l'une des revendications 6 ou 7, caractérisé en ce que la concentration en ions H⁺ dans la solution acide de gallium sortant de l'étape (iii) est comprise entre 3,5 N et 4,5 N.

9. Procédé selon l'une des revendications 1 à 8, caractérisé en ce qu'on contrôle la concentration en ions H⁺ et chlorures dans la solution acide après l'étape (v) avant son recyclage dans l'étape (ii).

10. Procédé selon l'une des revendications 1 à 9, caractérisé en ce que l'agent extractant précité est une hydroxyquinoléine substituée, un de ses dérivés ou un mélange de ceux-ci.

11. Procédé selon l'une des revendications 1 à 10, caractérisé en ce que l'extraction sélective du gallium dans l'étape (v) est réalisée par passage de la solution acide de gallium sur une résine échangeuse d'ions basique.

12. Procédé selon l'une des revendications 1 à 10, caractérisé en ce que l'extraction sélective du gallium dans l'étape (v) est réalisée par extraction liquide-liquide, l'agent extractant est choisi parmi les agents anioniques ou les agents solvatants.

## Claims

1. Process for the recovery of gallium contained in very basic aqueous solutions by liquid-liquid extraction using an organic phase mainly consisting of an organic extractant and an organic solvent, which comprises the following stages:
(i) extracting gallium from the very basic solution with the organic phase mentioned above,
(ii) washing the said organic phase containing gallium with a first acidic solution, in order to extract therefrom at least partially and selectively with respect to gallium the cations present in the organic solution,
(iii) extracting gallium from the said organic phase washed with a second acidic solution,
(iv) adjusting the concentration of halide ions in the acidic solution of gallium obtained in stage (iii),
(v) selectively extracting gallium from this acidic solution and
(vi) recovering the gallium thereby extracted,
characterised in that the first acidic solution employed in stage (ii) consists of at least a part of the acidic solution recovered in stage (v) after the selective extraction of gallium.

2. Process according to claim 1, characterised in that the first acidic solution mentioned above consists of the whole of the acidic solution mentioned above, recovered in stage (v).

3. Process according to claim 1 or 2, characterised in that the concentration of halide ions in stage (iv) is adjusted to a value of between 3.5 M and 8 M.

4. Process according to claim 1, 2 or 3, characterised in that the adjustment of the halide ion concentration in stage (iv) is carried out by adding hydrochloric acid in gaseous form or as a solution, or metal halides in pure form or as a solution.

5. Process according to claim 4, characterised in that the metal halides are alkali metal chlorides or alkaline-earth metal chlorides, preferably sodium chloride.

6. Process according to one of the preceding claims, characterised in that the acidic solution of gallium leaving stage (iii) has an H⁺ ion concentration higher than 1.5 N and preferably between 1.5 and 6 N, the chloride ion concentration being not greater than 2.5 N and in that the acidic solution leaving stage (ii) mentioned above has an H⁺ ion concentration lower than 1 N.

7. Process according to one of claims 1 to 5, characterised in that the acidic solution of gallium leaving stage (iii) has an H⁺ ion concentration higher than 1.5 N and preferably between 1.5 and 6 N, the chloride ion concentration being not greater than 2.5 N and in that the acidic solution leaving stage (ii) has an H⁺ ion concentration higher than 1 N and a halide ion concentration not lower than 4 M and preferably between 4 and 6 M.

8. Process according to one of claims 6 and 7, characterised in that the H⁺ ion concentration in the acidic solution of gallium leaving stage (iii) is between 3.5 N and 4.5 N.

9. Process according to one of claims 1 to 8, characterised in that the concentration of H⁺ and chloride ions in the acidic solution is monitored after stage (v) before it is recycled into stage (ii).

10. Process according to one of claims 1 to 9, characterised in that the extractant agent mentioned above is a substituted hydroxyquinoline, one of the derivatives thereof or a mixture of the latter.

11. Process according to one of claims 1 to 10, characterised in that the selective extraction of gallium in stage (v) is carried out by passing the acidic solution of gallium through a basic ion exchange resin.

12. Process according to one of claims 1 to 10, characterised in that the selective extraction of gallium in stage (v) is carried out by liquid-liquid extraction, the extractant agent is chosen from anionic agents or solvating agents.

## Patentansprüche

1. Verfahren zur Rückgewinnung von Gallium, das in stark basischen wäßrigen Lösungen enthalten ist durch flüssig/flüssig Extraktion mit Hilfe einer organischen Phase bestehend hauptsächlich aus einem organischen Extraktionsmittel und einem organischen Lösungsmittel, umfassend die folgenden Stufen:
(i) Extrahieren des Galliums aus der stark basischen Lösung mit der oben erwähnten organischen Phase;
(ii) Waschen der das Gallium enthaltenden organischen Phase mit einer ersten sauren Lösung, um zumindest teilweise und selektiv, bezogen auf das Gallium, die in der organischen Lösung vorhandenen Kationen zu extrahieren;
(iii) Extrahieren des Galliums aus der erwähnten gewaschenen organischen Phase mit einer zweiten sauren Lösung;
(iv) Einstellen der Konzentration an Halogenionen in der in Stufe (iii) erhaltenen sauren Galliumlösung;
(v) selektives Extrahieren des Galliums aus dieser sauren Lösung;
(vi) Gewinnen des so extrahierten Galliums,
dadurch gekennzeichnet, daß die in Stufe (ii) angewandte erste saure Lösung zumindest teilweise aus der in Stufe (v) nach selektiver Extraktion des Galliums zurückgewonnenen sauren Lösung besteht.

2. Verfahren nach Anspruch 1, dadurch gekennzeichnet, daß die oben erwähnte erste saure Lösung vollständig aus der in Stufe (v) zurückgewonnenen oben erwähnten sauren Lösung besteht.

3. Verfahren nach Anspruch 1 oder 2, dadurch gekennzeichnet, daß man die Konzentration an Halogenionen in der Stufe (iv) auf einen Wert zwischen 3,5 M und 8 M einstellt.

4. Verfahren nach Anspruch 1, 2 oder 3, dadurch gekennzeichnet, daß die Einstellung der Halogenionenkonzentration in der Stufe (iv) durchgeführt wird durch Zugabe von Chlorwasserstoffsäure in Gasform oder als Lösung oder von Metallhalogeniden in reiner Form oder als Lösung.

5. Verfahren nach Anspruch 4, dadurch gekennzeichnet, daß die Metallhalogenide Alkali- oder Erdalkalimetallchloride sind, vorzugsweise Natriumchlorid.

6. Verfahren nach einem der vorangehenden Ansprüche, dadurch gekennzeichnet, daß die saure Galliumlösung aus Stufe (iii) eine Konzentration an H⁺ Ionen über 1,5 N und vorzugsweise zwischen 1,5 und 6 N aufweist, die Konzentration an Chloridionen höchstens gleich 2,5 N ist und die saure Lösung aus der oben erwähnten Stufe (ii) eine Konzentration an H⁺ Ionen kleiner 1 N aufweist.

7. Verfahren nach einem der Ansprüche 1 bis 5, dadurch gekennzeichnet, daß die saure Galliumlösung aus Stufe (iii) eine Konzentration an H⁺ Ionen über 1,5 N und vorzugsweise zwischen 1,5 und 6 N aufweist, die Konzentration an Chloridionen höchstens gleich 2,5 N ist und daß die saure Lösung aus Stufe (ii) eine Konzentration an H⁺ Ionen über 1 N aufweist und eine Konzentration an Halogenidionen von mindestens gleich 4 M und vorzugsweise zwischen 4 und 6 M.

8. Verfahren nach einem der Ansprüche 6 oder 7, dadurch gekennzeichnet, daß die Konzentration an H⁺ Ionen in der sauren Galliumlösung aus Stufe (iii) zwischen 3,5 N und 4,5 N liegt.

9. Verfahren nach einem der Ansprüche 1 bis 8, dadurch gekennzeichnet, daß man die Konzentration an H⁺ und Chloridionen in der sauren Lösung nach der Stufe (v) vor der Rückführung in die Stufe (ii) kontrolliert.

10. Verfahren nach einem der Ansprüche 1 bis 9, dadurch gekennzeichnet, daß das oben erwähnte Extraktionsmittel ein substituiertes Hydroxychinolin, eines seiner Derivate oder ein Gemisch davon ist.

11. Verfahren nach einem der Ansprüche 1 bis 10, dadurch gekennzeichnet, daß die selektive Extraktion von Gallium in Stufe (v) durchgeführt wird durch Leiten der sauren Galliumlösung über ein basisches Ionenaustauscherharz.

12. Verfahren nach einem der Ansprüche 1 bis 10, dadurch gekennzeichnet, daß die selektive Extraktion von Gallium in Stufe (v) durchgeführt wird durch flüssig/flüssig Extraktion, wobei das Extraktionsmittel ausgewählt ist aus den anionischen Mitteln und den solvatisierenden Mitteln.
